# EUROPEAN PATENT APPLICATION

(11) **EP 2 194 454 A1**
(43) Date of publication of application: **09.06.2010**
(21) Application number: 09177899.3
(22) Date of filing: 03.12.2009
(51) Int. Cl.: G06F 3/048

(54) **Display apparatus and method of displaying contents list**

(30) Priority: 05.12.2008 KR 20080123407
(71) Applicant: Samsung Electronics Co., Ltd., Suwon-si, Gyeonggi-do 442-742 (KR)
(72) Inventor: Ahn, Jun-mo, Seoul (KR); Kwon, Yong-hwan, Gyeonggi-do (KR); Kim, Joon-hwan, Gyeonggi-do (KR); Kwon, Heui-jin, Gyeonggi-do (KR); Lee, Chang-soo, Seoul (KR); Lee, Jeong-yeon, Gyeonggi-do (KR); Szilagyi, Victor, London, N7 9JN (GB)
(74) Representative: Brandon, Paul Laurence

(57) **Abstract**

Disclosed is a method and apparatus for displaying a contents list. The method includes: displaying a loading image, which is preset for displaying, on a loading region to display a thumbnail image corresponding to contents of the loading image, wherein the loading image corresponds to the thumbnail images; animating the loading image displayed in the loading region; and displaying the thumbnail image in the loading region, by substituting the thumbnail image for the loading image.

## Description

### BACKGROUND OF THE INVENTION

### 1. Field of the Invention

Apparatuses and methods consistent with the present invention relate to displaying contents in a variety of forms and displaying the contents in a list ("contents list"), thereby allowing a user to readily know the substance of each content.

### 2. Description of the Related Art

A display apparatus displays a variety of contents as images on a display panel thereof through a variety of processes. The contents are input externally or stored in the display apparatus. Due to the technical development of the display apparatus, there has been an increase is the type and form of the contents that can be displayed by the display apparatus. For example, a variety of contents include moving images and still images digitally databased, and game applications, in addition to broadcasting contents transmitted by wire or wirelessly from broadcasting stations.

The display apparatus can display the contents in a list to provide a user with data on the contents. In the contents list, methods of displaying data corresponding to each content can be designated in various ways by using, for example, an icon, a file name of each content or meta data. If the contents list is displayed by a corresponding thumbnail image of each content, the user can readily know the substance of a desired content.

However, a method of displaying a contents list with thumbnail images would increase the system load on the display apparatus if there are numerous thumbnail images. For this reason, while a plurality of thumbnail images are displayed, it would be difficult to check whether a displaying process of the thumbnail images is proceeding or the displaying process is suspended because of the excessive system load.

### SUMMARY OF THE INVENTION

According to an aspect of the present invention, there is provided a method of displaying a contents list of a display apparatus, the method including: displaying a loading image, which is preset for displaying, on a loading region to display a thumbnail image corresponding to contents of the loading image, wherein the loading image corresponding to the thumbnail images; animating the loading images displayed in the loading regions; and displaying the thumbnail images in the loading regions, by substituting the thumbnail images for the loading images.

The animating the loading image may include pivoting the loading image by a preset degree of an angle.

The pivoting the loading image by the preset degree of the angle may include pivoting a plurality of loading images by a same degree of an angle.

The pivoting the loading image by the preset degree of the angle may include pivoting a plurality of the loading images at random.

The pivoting the loading image by the preset degrees of an angle may include displaying a plurality of loading images by differentiating respective pivoting speeds of the plurality of the loading images in order to display a plurality of thumbnail images.

The displaying the thumbnail image on the loading region may include animating the displayed loading image and the thumbnail image together while the displayed loading image is substituted by the thumbnail image; and suspending animating the thumbnail image if substituting the displayed loading image with by the thumbnail image is complete.

According to another aspect of the present invention, there is provided a display apparatus including: a display unit; a content processing unit which processes a thumbnail image corresponding to contents to display the thumbnail image on the display unit; and a control unit which controls the content processing unit to form a loading region to display the thumbnail image in the loading region on the display unit, displaying the loading image, which is preset for displaying, corresponding to the thumbnail image in the loading region and animating the displayed loading image, and substituting the loading image with the thumbnail image to display in the loading region.

The control unit may control the loading image to be pivoted by a preset degrees of an angle.

The control unit may control a plurality of loading images to be pivoted by a same degree of an angle.

The control unit may control a plurality of loading images to be pivoted at random.

The control unit may differentiate the pivoting speeds of each of the plurality of loading images to be displayed in an order as a plurality of thumbnail images are displayed.

The control unit may animate both the displayed loading images and the thumbnail images together while the displayed loading images are being substituted by the thumbnail images, and suspend animating the thumbnail images when the substituting the displayed loading images by the thumbnail images is finished.

### BRIEF DESCRIPTION OF THE DRAWINGS

The above and/or other aspects of the present invention will become apparent and more readily appreciated from the following description of the exemplary embodiments, taken in conjunction with the accompanying drawings of which:

FIG. 1 is a block diagram showing a configuration of a display apparatus according to an exemplary embodiment of the present invention;

FIG. 2 illustrates displaying loading images corresponding to thumbnails when a contents list is displayed on the display apparatus of FIG. 1;

FIG. 3 illustrates displaying the thumbnail images in the contents list of FIG. 2;

FIG. 4 illustrates substituting the loading images with the thumbnail images in the contents list of FIG. 3; and

FIG. 5 is a flow chart illustrating a process of displaying the contents list including the thumbnail images in the display apparatus of FIG. 1.

### DETAILED DESCRIPTION OF THE EXEMPLARY EMBODIMENTS

Reference will now be made in detail to the exemplary embodiments according to the present invention, examples of which are illustrated in the accompanying drawings, wherein like reference numerals refer to the like elements throughout. The exemplary embodiments are described below in order to explain the present invention by referring to the figures.

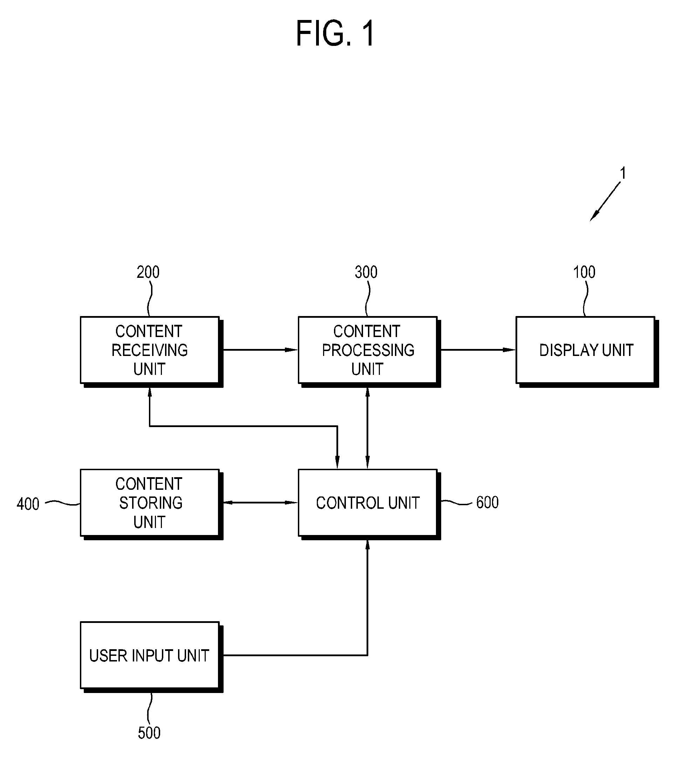

FIG. 1 is a block diagram showing a configuration of a display apparatus 1 according to an exemplary embodiment of the present invention. There are various ways of implementing the display apparatus 1 and it is not limited to the exemplary embodiment. For example, the display apparatus 1 may be implemented in various ways, e.g., as a television (TV), a monitor for a computer, an electronic picture frame, a portable media player and so on.

As shown in FIG. 1, the display apparatus 1 includes a display unit 100 to display each of a plurality of contents as an image thereon, a content processing unit 300 to process the contents or data on the contents so as to be displayed in a list on the display unit 100, and a control unit 600 to control a processing operation performed by the content processing unit 300.

When the contents list is displayed according to this exemplary embodiment, the display apparatus 1 can display thumbnail images each corresponding to each content. In this case, the display apparatus 1 displays a preset loading image in a loading region on which a thumbnail image is displayed, and animates the loading image while it is being substituted by its corresponding thumbnail image.

This process enables the user to easily know whether the display apparatus 1 is performing a list displaying process normally, or whether a thumbnail image will not be displayed in a loading region at the current point in time.

The display apparatus 1 may further include a content receiving unit 200 to receive content from an external source, a content storing unit 400 to store the received content therein, and a user input unit 500 manipulated by a user to transmit a command to control a preset operation to the control unit 600.

These sub-elements of the display apparatus 1 mentioned above will be described in more detail below.

The display unit 100 displays data of various forms, including content, processed by the content processing unit 300. There is no limitation to ways of implementing the display unit 1. For example, the display unit 100 may be implemented as a liquid crystal display (LCD), a plasma display panel (PDP), an organic light emitting diode (OLED) display, a field emission display (FED), an electroluminescence display (ELD) and so on.

The content receiving unit 200 receives content supplied from a content supplying source (not shown) to which no limitation is applied, and transmits it to the content processing unit 300.

The content receiving unit 200 may have various specifications. For example, if the display apparatus 1 is implemented as a TV, the content receiving unit 200 receives a radio frequency (RF) signal transmitted from a broadcasting station (not shown) wirelessly or images input according to any specification, such as composite video, component video, super video, Radio and Television Receiver Manufacturer's Association (SCART) or high definition multimedia interface (HDMI).

If the display apparatus 1 is a monitor for a computer, the content receiving unit 200 may be implemented as a D-sub that can transmit RGB signals according to a Video Graphics Array (VGA) specification, digital video interactive (DVI) or HDMI specifications.

The content receiving unit 200 may receive digitally packeted content data from a computer main body (not shown), a server (not shown) or an external storage (not shown) including a universal serial bus (USB) by wire or wirelessly through a local network.

The content processing unit 300 processes the content transmitted from the content receiving unit 200 or the content storing unit 400 and displays it on the display unit 100. There is no limitation to the configuration of the content processing unit 300 to process the content. For example, it may include a decoder having codecs corresponding to various content formats, a frame rate conversion block of an image, a scaler converting the image in size and resolution to allow the display unit 100 to display it, various enhancement blocks to improve image quality, etc.

The content processing unit 300 may be embodied as a group of colonies with respect to respective elements that can perform such specific functions independently, or as an integral body in a single chip, incorporating several functions.

The content processing unit 300 generates a contents list displaying data on contents that can be referenced, e.g., contents stored in the content storing unit 400 or received from the content receiving unit 200, according to a control by the control unit 600, and displays the generated contents list on the display unit 100. The contents list can be displayed in various ways on the display unit, for example, it may be implemented as an on-screen display (ODS) or as a pop-up window. Otherwise, the content processing unit 300 may be provided a separate function to generate an OSD or a pop-up window.

When the content processing unit 300 generates a contents list, various methods to display the contents by each item in the list can be designated. For example, items of each content can be displayed in the list by an icon, a file name of the content, meta data and a thumbnail image, etc.

Here, a thumbnail image refers to a miniature image which enables a user to readily recognize the substance of content. The thumbnail image may include a still image, or a moving image operated for a predetermined period of time. Where the content is a moving image, a thumbnail image corresponding thereto may include a still image at a predetermined point of time, in a part or a whole part of the image for the predetermined period of time. Where the content is a still image, a thumbnail image corresponding thereto may include an image of reducing a part or a whole part of the content.

When a thumbnail image is displayed in the list, it is downgraded in size and resolution in order to decrease the system load. A configuration of the thumbnail image corresponding to specified content may be packaged with the specified content, so that it can be recalled from the content processing unit 300 in displaying the list. In displaying the list, the content processing unit 300 can also generate the thumbnail image from the content according a predetermined routine.

The content storing unit 400 stores contents received externally through the content receiving unit 200, therefore it can provide any desired content to be displayed on the display unit 100 to the content processing unit 300. In order to maintain the stored contents even in case of power failure, the content storing unit 400 can be a flash memory, a hard disk drive (HDD), a solid state drive (SSD) and so on.

The user input unit 500 is manipulated by a user in order to transmit a preset command to the control unit 600. The control unit 600 can perform a control operation corresponding to the command. The user input unit 500 may be a menu key (not shown) installed on an external face of the display apparatus 1, a remote controller (not shown), a touch pad (not shown), or a touch screen (not shown) integrally formed with the display apparatus 1.

When a command to generate a contents list including thumbnail images is received, the control unit 600 controls the content processing unit 300 to allow the thumbnail images corresponding to the contents to be displayed on the display unit 100.

Before displaying the thumbnail images, the control unit 600 first forms in the list, loading regions to display the thumbnail images thereon, and controls the preset loading images to be displayed on the loading regions. The control unit 600 substitutes the displayed loading images by thumbnail images to be displayed in the preset order. The loading images may be different by each content item or each thumbnail image, or may be identical to reduce the system load.

As the contents items are numerous, this may generate a delay for a predetermined time until the thumbnail images are displayed, due to the system load of the display apparatus 1.

Accordingly, while a process of displaying the thumbnail images is performed, the control unit 600 animates the loading images in the course of being displayed. Meanwhile, the control unit 600 does not animate any thumbnail image whose displaying is finished, to thereby distinguish the displayed thumbnail images from the loading images.

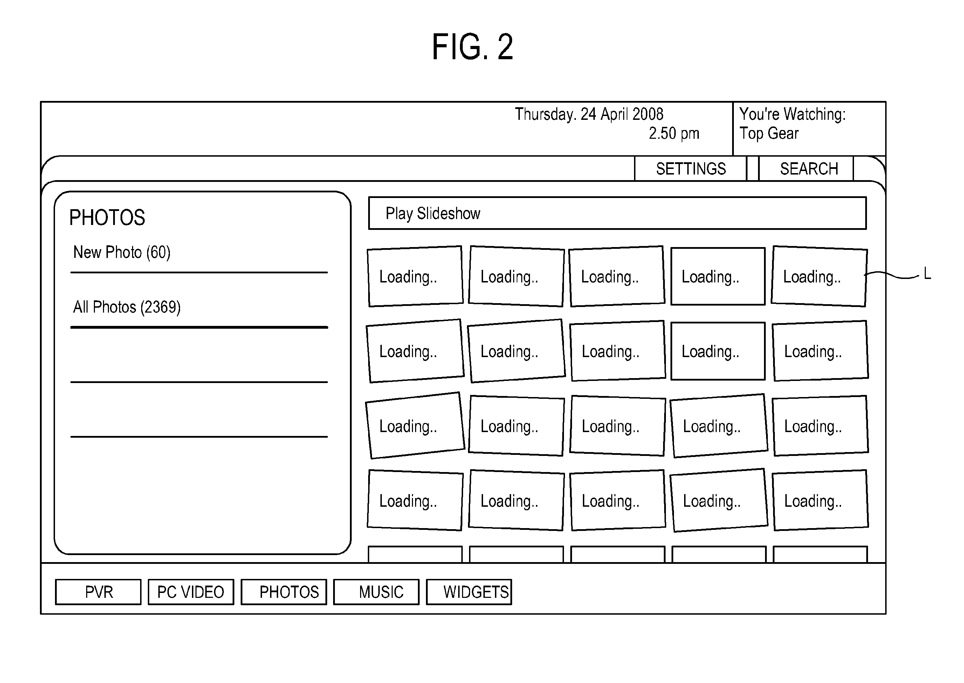

An exemplary embodiment of displaying a contents list including thumbnail images will be described below with reference to FIGS. 2 to 4.

FIG. 2 illustrates loading images each image corresponding to each thumbnail image when a contents list according to an exemplary embodiment is displayed.

As shown in FIG. 2, the control unit 600 receives a command to display a contents list from the user input unit 500, then forms loading regions to display thereon the thumbnail images each corresponding to each content, and displays a loading image L on each loading region, which corresponds to each thumbnail image.

The control unit 600 animates the displayed loading image L. The animation operations can be performed in various ways and is not limited to the exemplary embodiment. According to an exemplary embodiment, the loading image L can be pivotingly animated by a preset degree of an angle, for example, 5 to 10 degrees.

When the loading image L performs a pivoting operation, the control unit 600 controls a plurality of loading images L to be pivoted by the same degree of an angle or each of the loading images L to be pivoted at random. FIG. 2 illustrates random pivoting of each loading image L, but the present invention is not limited thereto.

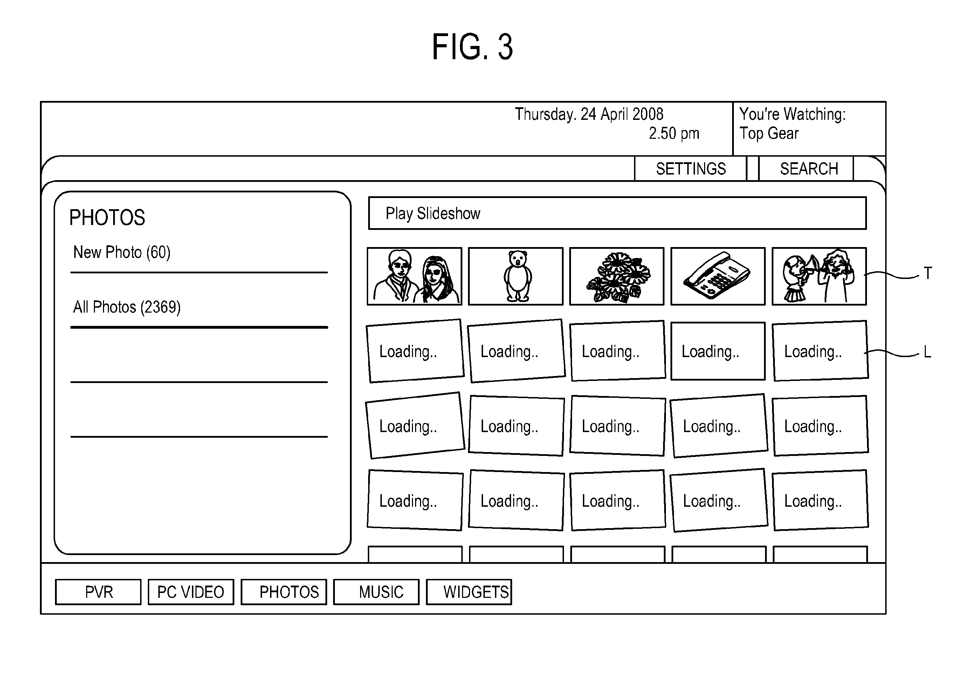

The control unit 600 controls the thumbnail images substituting the loading images L to be displayed in the preset order, starting from the state shown in Fig. 2. This process will be further described with reference to FIG. 3.

FIG. 3 illustrates displaying the thumbnail images in the contents list.

As shown in FIG. 3, the control unit 600 controls the content processing unit 300 so as to substitute the loading images L by the thumbnail images T in the preset order, for example, starting from the top left and moving in a rightward direction. FIG. 3 shows the thumbnail images T displayed on the loading regions in the first row of the contents list.

The control unit 600 controls the thumbnail images T, whose displaying is finished, so as not to be pivoted, while maintaining pivoting operations with respect to the loading images L. That is, the displayed thumbnail images T are stationary, but the displayed loading images L are pivoted. Thus, the user can easily distinguish the thumbnail images T from the loading images L.

If the display apparatus 1 is suspended or fails because of excessive system load while the thumbnail images T are being displayed, pivoting operations with respect to the loading images L will not be performed. By ascertaining whether pivoting operations are being performed, the user can easily know if there are any errors in the operation of the display apparatus 1.

The control unit 600 may also display the thumbnail images in the order as displayed, by differentiating the pivoting speeds of respective loading images L. For example, with respect to a loading image L in the loading region having a higher priority for displaying the corresponding thumbnail image, the pivoting speed of the concerned loading image L can be adjusted to be relatively fast. According to this, the user can easily anticipate which loading region the thumbnail image T will be displayed.

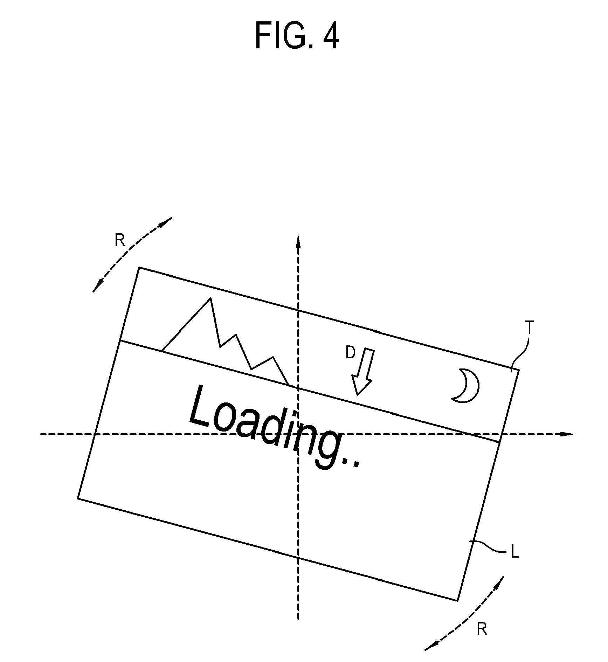

With respect to any one of the loading regions shown in FIG. 3, an exemplary embodiment of the control process performed while a loading image L which is already displayed is substituted by a thumbnail image will be described with reference to FIG. 4.

FIG. 4 illustrates displaying a loading image L which is substituted by a thumbnail image T in a loading region of FIG. 3.

As illustrated in FIG. 4, the loading image L which is already displayed in a loading region is pivoted towards an R direction in parallel with a display face of the display unit 100. At this state, the control unit 600 displays the thumbnail image T along a predetermined direction, e.g., a D direction.

When displaying the thumbnail image T in a loading region has not finished, the loading image L and the thumbnail image T are mixedly displayed in the loading region. At this state, the control unit 600 animates both the loading image L and the thumbnail image T to pivot together, whereby the user can know that the thumbnail image T is in the process of being displayed.

However, the configuration described above is merely by way of example. If displaying of the thumbnail image T starts in a loading region, the control unit 600 may suspend the pivoting operation of the loading image L already displayed in the loading region.

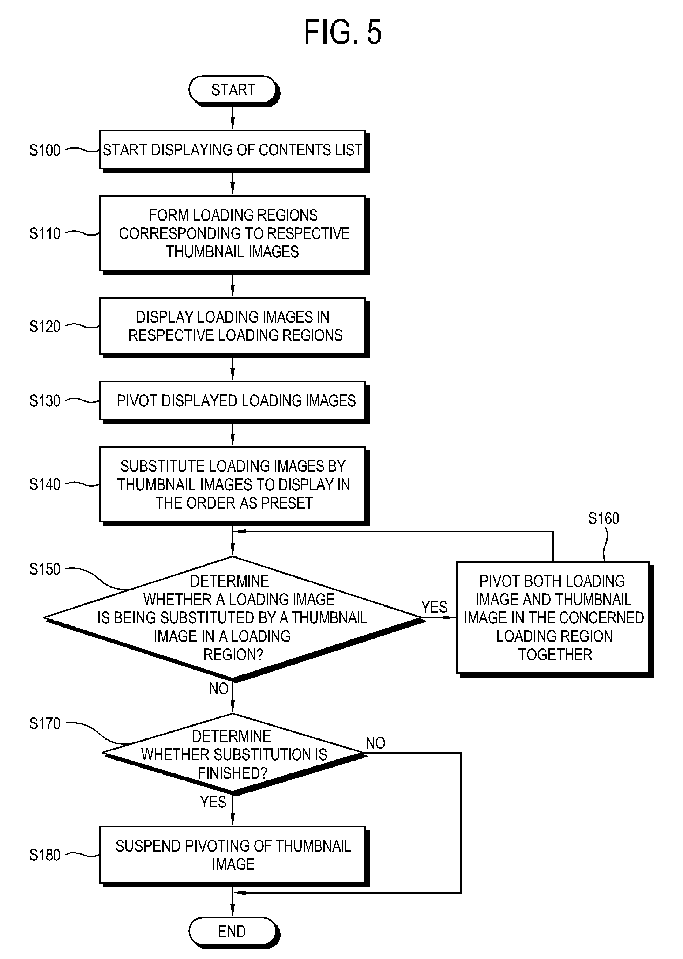

With this configuration, a process of displaying a contents list including thumbnail images in the display apparatus 1 according to an exemplary embodiment will be described with reference to FIG. 5. FIG. 5 is a flow chart illustrating this process.

As shown in FIG. 5, if a command to display the contents list from the user input unit 500 is received, the control unit 600 starts to display the contents list (S100).

The control unit 600 controls the content processing unit 300 in order to form loading regions in the contents list, corresponding to respective thumbnail images (S110), and to display loading images previously set in the loading regions (S120). The control unit 600 pivotingly animates the displayed loading images (S130).

The control unit 600 substitutes the loading image already displayed in each loading region by the thumbnail images based on the preset order and displays them (S140).

With respect to a loading region, the control unit 600 determines whether the substitution is being performed therein (S150).

If it is determined that the substitution is being performed in the loading region, the control unit 600 pivots both the loading image and the thumbnail image of the concerned loading region together (S160).

If the substitution is not being performed in the loading region, the control unit 600 determines whether the substitution has been finished (S170).

If it is determined that the substitution has been finished, the control unit 600 suspends pivoting of the thumbnail image in the concerned region at S180.

This process is performed until the loading images displayed in the list are all substituted by the thumbnail images.

While the thumbnail images each corresponding to each of the contents items are displayed in the contents list, the user can easily know the loading regions in which thumbnail images are yet to be displayed and the thumbnail images already displayed.

Although a few exemplary embodiments of the present invention have been illustrated and described in detail, the present invention shall be limited thereto, and can be carried out in various ways, within the scope of the claims as claimed in the specification. Further, it will be appreciated by those skilled in the art that changes may be made in these exemplary embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of displaying a contents list of a display apparatus, the method comprising:
displaying a loading image, which is preset for displaying, on a loading region to display a thumbnail image corresponding to contents of the loading image, wherein the loading image corresponds to the thumbnail image;
animating the loading image displayed in the loading region; and
displaying the thumbnail image in the loading region, by substituting the loading image with the thumbnail image.

2. The method of claim 1, wherein the animating the loading image comprises pivoting the loading image by a preset degree of an angle.

3. The method of claim 2, wherein the pivoting the loading image by the preset degree of the angle comprises pivoting a plurality of loading images by the same degree of the angle.

4. The method of claim 2, wherein the pivoting the loading image by the preset degree of the angle comprises pivoting a plurality of the loading images at random.

5. The method of claim 2, wherein the pivoting the loading image by the preset degree of the angle comprises displaying a plurality of loading images by differentiating respective pivoting speeds of the plurality of loading images in an order to display a plurality of thumbnail images.

6. The method of claim 1, wherein the displaying the thumbnail image on the loading region comprises:
animating the displayed loading image and the thumbnail image together while the displayed loading image is substituted by the thumbnail image; and
suspending animating the thumbnail image if substituting the displayed loading image by the thumbnail image is complete.

7. A display apparatus comprising:
a display unit;
a content processing unit which processes a thumbnail image corresponding to contents to display the thumbnail image on the display unit; and
a control unit which controls the content processing unit to form a loading region to display the thumbnail image in the loading region on the display unit, which displays the loading image as preset corresponding to the thumbnail image in the loading region and animates the displayed loading image, and substitutes the loading image with the thumbnail image to display the thumbnail image in the loading region.

8. The display apparatus of claim 7, wherein the control unit controls the loading image to be pivoted by a preset degree of an angle.

9. The display apparatus of claim 8, wherein the control unit controls a plurality of loading images to be pivoted by the same degree of the angle.

10. The display apparatus of claim 8, wherein the control unit controls a plurality of loading images to be pivoted at random.

11. The display apparatus of claim 9, wherein the control unit differentiates pivoting speeds of each of the plurality of loading images to be displayed in an order as a plurality of thumbnail images are displayed.

12. The display apparatus of claim 7, wherein the control unit animates both the displayed loading image and the thumbnail image together while the displayed loading image is being substituted by the thumbnail image, and suspends animating the thumbnail image if the substituting the displayed loading image with the thumbnail image is complete.
